# EUROPÄISCHE PATENTSCHRIFT

(11) **EP 3 248 130 B1**
(45) Veröffentlichungstag und Bekanntmachung des Hinweises auf die Patenterteilung: **23.10.2019**
(21) Anmeldenummer: 16701724.3
(22) Anmeldetag: 19.01.2016
(51) Int. Cl.: G06F 21/44, G06F 21/71, G06F 21/74

(54) **LAUFZEITUMGEBUNG FÜR MOBILES ENDGERÄT, DIE EIN BEREITSTELLEN EINES SICHERHEITS-DIENSTES ERMÖGLICHT**
TRUSTED EXECUTION ENVIRONMENT ON A DISTANT SERVER FOR A MOBILE PHONE
ENVIRONEMENT D'EXECUTION SÉCURISÉ ET VIRTUALISÉ SUR UN SERVEUR POUR UN TELEPHONE MOBILE

(30) Priorität: 20.01.2015 DE 102015000656
(43) Veröffentlichungstag der Anmeldung: 29.11.2017
(73) Patentinhaber: Giesecke+Devrient Mobile Security GmbH, 81677 München (DE)
(72) Erfinder: SCHWARTZ, Udo, 81541 München (DE); STADLER, Kurt, 82041 Oberhaching (DE)
(86) Internationale Anmeldenummer: PCT/EP2016/000086
(87) Internationale Veröffentlichungsnummer: WO 2016/116271

(56) Entgegenhaltungen:
- US-A1- 2014 281 531
- US-A1- 2014 317 686
- Anonymous: "Remote procedure call - Wikipedia, the free encyclopedia", , 17. Dezember 2014 (2014-12-17), XP055263678, Gefunden im Internet: URL:https://en.wikipedia.org/w/index.php?t itle=Remote_procedure_call&oldid=638457023 [gefunden am 2016-04-07]
- WEIQI DAI ET AL: "TEE: A virtual DRTM based execution environment for secure cloud-end computing", FUTURE GENERATIONS COMPUTER SYSTEMS., Bd. 49, 26. August 2014 (2014-08-26), Seiten 47-57, XP055265162, NL ISSN: 0167-739X, DOI: 10.1016/j.future.2014.08.005
- Anonymous: "Hardware security module - Wikipedia", , 16 December 2014 (2014-12-16), XP055515914, Retrieved from the Internet: URL:https://en.wikipedia.org/w/index.php?t itle=Hardware_security_module&oldid=638401 489 [retrieved on 2018-10-16]

## Beschreibung

### Gebiet der Erfindung

Die Erfindung betrifft eine Laufzeitumgebung für ein mobiles Endgerät, die eine normale und ein sichere Laufzeitumgebung umfasst und ein Bereitstellen eines Sicherheits-Dienstes von der sicheren an die normale Laufzeitumgebung ermöglicht, sowie ein Verfahren zum Bereitstellen eines Sicherheits-Dienstes einer Trusted-Applikation in der sicheren Laufzeitumgebung an eine Client-Applikation in der normalen Laufzeitumgebung.

### Stand der Technik

In mobilen Endgeräten wie Smartphones, (mobilfunkfähigen) Tablet PCs und dergleichen sind sichere Laufzeitumgebungen TEEs (TEE = trusted execution environment) bekannt, bei denen auf Software-Ebene eine Trennung zwischen Ausführungsumgebungen unterschiedlicher Sicherheitsniveaus erzeugt wird. Eine erste, auch "Normal Zone", "Normal World" oder "Rich Execution Environment REE" genannte unsichere oder normale Laufzeitumgebung ist durch ein Normalbetriebssystem (z.B. Android, Windows Phone, Symbian, iOS) gesteuert. Eine zweite, auch "Trustzone", "Trusted World", "Secure World" oder "Trusted Execution Environment TEE" genannte sichere oder vertrauenswürdige Laufzeitumgebung ist durch ein Sicherheitsbetriebssystem gesteuert.

Das Dokument "Global Platform Device Technology: TEE System Architecture, Version 1.0, December 2011" beschreibt ein mobiles Endgerät mit einer normalen oder unsicheren Ausführungsumgebung "Rich Execution Environment (REE)" und einer sicheren Ausführungsumgebung "Trusted Execution Environment (TEE)" (vgl. Kapitel 1).

Trusted Applikationen (Sicherheits-Applikationen, TA), die zur Ausführung in der sicheren Laufzeitumgebung implementiert sind, stellt das Sicherheitsbetriebssystem Sicherheitsfunktionen wie Verschlüsselung und die Nutzung sicherer Kanäle zwischen dem Endgerät und externen Geräten (z.B. anderen Endgeräten oder Servern) für die Übertragung von Daten vom und zum Endgerät zur Verfügung. Applikationen, die zur Ausführung in der normalen Laufzeitumgebung implementiert sind, steht der volle Funktionsumfang des Normalbetriebssystems zur Verfügung.

Der sicheren Laufzeitumgebung sind speziell abgesicherte sichere persistente Speicherbereiche zugewiesen, in denen beispielsweise sicherheitskritische Speicher, Schlüssel und Personalisierungsdaten von Applikationen gespeichert sind. Weiter ist der sicheren Laufzeitumgebung ein sicherer Arbeitsspeicher (dieser kann ein separater Arbeitsspeicher oder ein Teilbereich des normalen Arbeitsspeichers sein) zugewiesen, in dem die sicheren Applikationen ausführbar sind.

Von den Applikationen, die in einem Endgerät ausführbar sind, stellen für den Nutzer des Endgeräts die Client-Applikationen den eigentlichen Nutzen dar. Als Client-Applikationen können beispielsweise diverse Service-Applikationen vorgesehen sein. Beispiele für Service-Applikationen sind Finanz-Applikationen, insbesondere Geldbörsen-Applikationen (Wallet-Applikationen) oder virtuelle Kreditkarten-Applikationen, Bonusprogramm-Applikationen (Loyalty-Applikationen), Ticketing-Applikationen für elektronische Fahrscheine, E-Mail-Applikationen und dergleichen Applikationen. Client-Applikationen sind zur Ausführung in der normalen Laufzeitumgebung implementiert.

Um ein höheres Maß an Sicherheit zu erreichen, delegieren Client-Applikationen sicherheitskritische Aufgaben wie z.B. kryptographische Operationen (z.B. Ver-/Entschlüsselung, Authentisierung) an Trusted Applikationen.

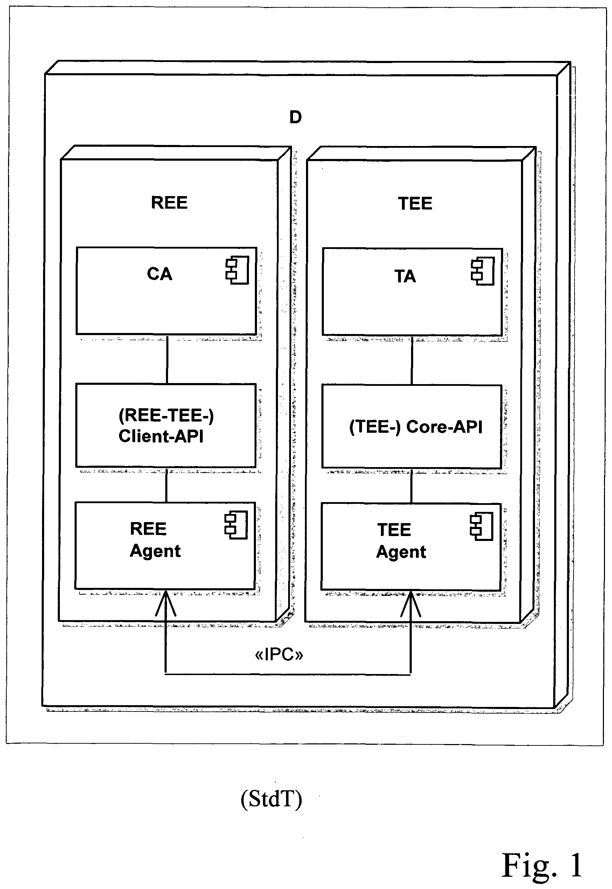

Fig. 1 zeigt eine Architektur für ein mobiles Endgerät ME (Mobile Entity) mit zwei Laufzeitumgebungen, nämlich einer normalen Laufzeitumgebung REE und einer sicheren Laufzeitumgebung TEE, gemäß dem Oberbegriff von Anspruch 1. Eine solche Architektur wird insbesondere von der Global Platform Organisation vorgeschlagen. In der normalen Laufzeitumgebung REE ist eine Client Applikation CA implementiert, eine (REE-TEE-) Client-API genannte Endgerät-interne, REE-seitige Schnittstelle zwischen REE und TEE und ein REE-Agent, der die Funktion hat, Nachrichten der Client-API im Format von IPC-Nachrichten an das TEE zu senden und von dort zu empfangen. In der sicheren Laufzeitumgebung TEE ist eine Trusted Applikation implementiert, eine (TEE-) Core-API genannte Endgerät-interne, TEE-seitige Schnittstelle zwischen REE und TEE und ein TEE-Agent, der die Funktion hat, Nachrichten der Core-API im Format von IPC-Nachrichten an das REE zu senden und von dort zu empfangen. API steht für Application Programming Interface, also Applikations-Programmierschnittstelle.

Bei der Verwaltung der sicheren Laufzeitumgebung des Endgeräts, insbesondere beim Laden von Programmcode und Personalisierungsdaten von Sicherheits-Applikationen, sind strenge Sicherheitsvorgaben einzuhalten. Daher ist die Verwaltung der sicheren Laufzeitumgebung aufwändig. Gemessen an diesen Rahmenbedingungen können die Ressourcen an Speicher und Rechenleistung eines Endgeräts an Grenzen stoßen. Während das Endgerät ausgeschaltet ist, ist es zudem nicht erreichbar. Hierdurch kann es vorkommen, dass dringend erforderliche, sicherheitskritische Verwaltungsschritte an der sicheren Laufzeitumgebung erst mit zeitlicher Verzögerung durchgeführt werden können.

Nicht zuletzt sind Sicherheits-Applikationen in einem mobilen Endgerät der Gefahr von Angriffen und Manipulationen ausgesetzt. Unter diesem Aspekt wäre es wünschenswert in einem mobilen Endgerät so wenig sicherheitskritische Information (z.B. Programmcode und Daten) wie möglich zu haben.

Die US 2014/317686 A1 offenbart eine verteilte, vertrauenswürdige Ausführungsumgebung, welche auf einem Gerät angeordnet ist.

Die US 2014/281531 A1 offenbart ein System zur vertrauenswürdigen Datenverarbeitung in einer öffentlichen Rechnerwolke (Cloud).

### Zusammenfassung der Erfindung

Der Erfindung liegt die Aufgabe zu Grunde, eine Laufzeitumgebung für ein mobiles Endgerät zu schaffen, die ein Bereitstellen eines Sicherheit-Dienstes von der sicheren an die normale Laufzeitumgebung ermöglicht, und welche dabei ein hohes Maß an Sicherheit, Zuverlässigkeit und Verwaltungsfreundlichkeit bietet. Weiter soll ein Verfahren angegeben werden, um einen Sicherheits-Dienst aus der sicheren Laufzeitumgebung an die normale Laufzeitumgebung bereitzustellen.

Die Aufgabe wird gelöst durch eine Laufzeitumgebung nach Anspruch 1. Ein Verfahren zum Bereitstellen eines Sicherheits-Dienstes ist in Anspruch 8 angegeben. Vorteilhafte Ausgestaltungen der Erfindung sind in den abhängigen Ansprüchen angegeben.

Eine erfindungsgemäße Laufzeitumgebung für ein mobiles Endgerät umfasst eine im Endgerät implementierte normale Laufzeitumgebung für Client-Applikationen und eine durch das Endgerät nutzbare sichere Laufzeitumgebung für Trusted Applikationen. Die normale Laufzeitumgebung und die sichere Laufzeitumgebung sind dazu eingerichtet, zusammenwirkend eine Kommunikationsverbindung zwischen der normalen und der sicheren Laufzeitumgebung herzustellen und zu betreiben, so dass Dienst-Anforderungen von der normalen an die sichere Laufzeitumgebung übertragen werden können und den Dienst-Anforderungen entsprechende Sicherheits-Dienste von der sicheren an die normale Laufzeitumgebung bereitgestellt werden können.

Die Laufzeitumgebung ist durch folgende Merkmale gekennzeichnet. Die sichere Laufzeitumgebung ist als externe sichere Laufzeitumgebung auf einem außerhalb des Endgeräts angeordneten Server implementiert. Die normale Laufzeitumgebung und die externe sichere Laufzeitumgebung sind, entsprechend der externen Auslagerung der sicheren Laufzeitumgebung auf einen Server, dazu eingerichtet, zum Herstellen der Kommunikationsverbindung ein Client /Server Protokoll (z.B. einen Remote Procedure Call) zwischen der normalen Ausführungsumgebung und der externen sicheren Laufzeitumgebung auszuführen. Im Rahmen der Ausführung des Client /Server Protokolls fordert die normale Laufzeitumgebung mit einer Dienst-Anforderungen von der externen sicheren Laufzeitumgebung die Bereitstellung eines Sicherheits-Dienstes an, z.B. mit einem Remote Procedure Call. Hierbei hat die normale Laufzeitumgebung die Rolle des Client, und die externe sichere Laufzeitumgebung die Rolle des Servers, so dass also der Client beim Server einen Sicherheits-Dienst anfordert. In Reaktion stellt die externe sichere Laufzeitumgebung den geforderten Sicherheits-Dienst an die normale Laufzeitumgebung bereit, z.B. als Remote Procedure.

Der Sicherheits-Dienst ist in dieser Konfiguration wartungsfreundlich und sicher auf dem externen Server implementiert. Auch bei ausgeschaltetem Endgerät ist der Sicherheits-Dienst zuverlässig stets erreichbar.

Somit ist gemäß der Erfindung eine sichere Laufzeitumgebung für ein mobiles Endgerät geschaffen, die das geforderte Bereitstellen eines Sicherheits-Dienstes bei einem hohen Maß an Sicherheit, Zuverlässigkeit und Verwaltungsfreundlichkeit bietet.

Die Laufzeitumgebung umfasst, gemäß einer bevorzugten Ausführungsform der Erfindung, wahlweise weiter eine in der normalen Laufzeitumgebung implementierte Client-API und eine in der sicheren Laufzeitumgebung implementierte Core-API, die dazu eingerichtet sind, Dienst-Anforderungen für Sicherheits-Dienste von Client-Applikationen an Trusted-Applikationen zu leiten, sowie mit Dienst-Anforderungen angeforderte Sicherheits-Dienste von Trusted-Applikationen an Client-Applikationen zu leiten. Die Laufzeitumgebung umfasst dabei weiter einen in der normalen Laufzeitumgebung implementierten REE-Agenten und einen in der sicheren Laufzeitumgebung implementierten TEE-Agenten, die dazu eingerichtet sind, zusammenwirkend eine Kommunikationsverbindung zwischen der normalen und der sicheren Laufzeitumgebung herzustellen und zu betreiben. Hierdurch können Dienst-Anforderungen von der normalen an die sichere Laufzeitumgebung übertragen werden und den Dienst-Anforderungen entsprechende Sicherheits-Dienste von der sicheren an die normale Laufzeitumgebung bereitgestellt werden. Die Laufzeitumgebung ist weiter dadurch gekennzeichnet, dass:
(i) die sichere Laufzeitumgebung als externe sichere Laufzeitumgebung auf einem außerhalb des Endgeräts angeordneten Server implementiert ist; und
(ii) der REE-Agent und der TEE-Agent dazu eingerichtet sind, zum Herstellen der Kommunikationsverbindung ein Client/Server Protokoll zwischen der normalen Ausführungsumgebung und der externen sicheren Laufzeitumgebung auszuführen.

Das Client/Server Protokoll umfasst beispielsweise das Senden eines Remote Procedure Calls für den Sicherheits-Dienst vom REE-Agenten (in der Rolle des Client) an den TEE-Agenten (in der Rolle als Server) und das Bereitstellen des Sicherheitsdienstes als Remote Procedure vom TEE-Agenten (Server) an den REE-Agenten (Client).

Die Laufzeitumgebung mit dem REE-Agenten und dem TEE-Agenten umfasst wahlweise weiter einen in der normalen Laufzeitumgebung implementierten REE-Sicherheits-Agenten und einen in der externen sicheren Laufzeitumgebung implementierten TEE-Sicherheits-Agenten. Dabei sind der REE-Sicherheits-Agent und der TEE-Sicherheits-Agent dazu eingerichtet, zusammenwirkend den mittels des REE-Agenten und der TEE-Agenten hergestellten und betriebenen Kommunikationskanal kryptographisch abzusichern. Beispielsweise wird also hierdurch ein kryptographisch gesicherter Remote Procedure Call verwirklicht oder ermöglicht.

Dem REE-Sicherheits-Agenten ist wahlweise Zugriff auf eine im Endgerät angeordnete Sicherheitskomponente ermöglicht, in welcher zumindest ein kryptographischer Schlüssel für die kryptographische Absicherung des Kommunikationskanals abgespeichert ist. Als Sicherheitskomponente ist beispielsweise ein Secure Element SE oder ein Trusted Platform Module TPM des Endgeräts vorgesehen, oder eine rein in Software verwirklichte Lösung einer Sicherheitskomponente. Das Secure Element kann insbesondere wahlweise den Formfaktor einer entfernbaren Karte (Chipkarte, Smartcard) oder alternativ eines festeingelöteten embedded Moduls haben.

Für die kryptographische Absicherung des Kommunikationskanals werden erfindungsgemäß zwei Alternativen bereitgestellt.

Gemäß einer ersten Alternative ist der REE-Sicherheits-Agent als Device-Attestation-Agent gestaltet, der dazu eingerichtet ist, eine kryptographische Prüffunktion, insbesondere eine Signatur oder einen Message Authentication Code, zu erzeugen und die Prüffunktion (z.B. Signatur, MAC, ...) anlässlich eines Übertragens einer Dienst-Anforderung von der normalen Laufzeitumgebung an die externe sichere Laufzeitumgebung zu übertragen. Der TEE-Sicherheits-Agent ist hierbei als Verifizierungs-Agent gestaltet, der dazu eingerichtet ist, eine vom Device-Attestation-Agent an den Verifizierungs-Agenten übertragene Prüffunktion (Signatur, MAC, ...) zu verifizieren. Wahlweise ist bei der ersten Alternative im Endgerät eine Sicherheitskomponente wie weiter oben beschrieben angeordnet, in der ein Krypto-Schlüssel zur Erzeugung der Prüffunktion gespeichert ist, insbesondere ein Signaturschlüssel zur Signaturerzeugung oder ein Krypto-Schlüssel zur MAC-Erzeugung.

Gemäß einer zweiten Alternative sind der REE-Sicherheits-Agent und der TEE-Sicherheits-Agent als Secure-Channel-Agenten gestaltet, die dazu eingerichtet sind, zwischen der normalen Laufzeitumgebung und der externen sicheren Laufzeitumgebung einen kryptographisch gesicherten Secure Channel (sicheren Übertragungskanal) zu betreiben. Zur Speicherung der Schlüssel zur Kanalerzeugung benutzt der REE Sicherheits-Agent vorzugsweise eine generische Sicherheitskomponente auf dem mobilen Endgerät, wie weiter oben beschrieben. Als Schlüssel zur Kanalerzeugung sind beispielweise (anfängliche) Schlüssel (z.B. Seed-Schlüssel) eines Authentisierungsprotokolls gespeichert, insbesondere eines Authentisierungsprotokolls mit Schlüsselableitung (insbesondere mit Ableitung von Authentisierungsschlüssel und Verschlüsselungsschlüssel).

Wahlweise ist im Endgerät zumindest eine Client-Applikation implementiert und auf dem Server zumindest eine Trusted-Applikation implementiert, um das Bereitstellen des Sicherheits-Dienstes von der sicheren Laufzeitumgebung an die normale Laufzeitumgebung als Bereitstellen des Sicherheits-Dienstes von der Trusted-Applikation an die Client-Applikation verwirklichen zu können.

In einem erfindungsgemäßen Endgerät ist in einer normalen Laufzeitumgebung ein REE-Agent implementiert, der dazu eingerichtet ist, zum Herstellen der weiter oben angegebenen Kommunikationsverbindung zum Server ein Client /Server Protokoll auszuführen, insbesondere einen Remote Procedure Call von der normalen Ausführungsumgebung an die externe sichere Laufzeitumgebung zu richten.

In einem erfindungsgemäßen Server ist in einer externen sicheren Laufzeitumgebung ein TEE-Agent implementiert, der dazu eingerichtet ist, ein Client/Server Protokoll auszuführen, insbesondere einen Remote Procedure Call von der normalen Ausführungsumgebung an die externe sichere Laufzeitumgebung entgegenzunehmen.

Ein erfindungsgemäßes Verfahren zum Bereitstellen eines Sicherheits-Dienstes einer Trusted-Applikation an eine Client-Applikation, in einer erfindungsgemäßen Laufzeitumgebung, umfasst die Schritte: A) Übertragen einer Dienst-Anforderung für einen Sicherheits-Dienst einer in der externen sicheren Laufzeitumgebung implementierten Trusted-Applikation von einer in der normalen Laufzeitumgebung implementierten Client-Applikation an die Trusted-Applikation; und B) Bereitstellen des angeforderten Sicherheits-Dienstes von der Trusted-Applikation an die Client-Applikation.

Dabei wird anlässlich von Schritt A) ein Client/Server Protokoll zwischen der normalen Ausführungsumgebung und der externen sicheren Laufzeitumgebung ausgeführt, insbesondere ein Remote Procedure Call von der normalen Ausführungsumgebung an die externe sichere Laufzeitumgebung eröffnet, die Dienst-Anforderung im Rahmen des Client/Server Protokolls, insbesondere Remote Procedure Call, von Client-Applikation an die Trusted-Applikation übertragen wird, und der Sicherheits-Dienst im Rahmen des Client/Server Protokolls, insbesondere als bereitgestellte Remote Procedure, von der Trusted-Applikation an die Client-Applikation bereitgestellt wird.

Wahlweise ist bei dem Verfahren, die Laufzeitumgebung weiter mit einem REE-Agenten und einem TEE-Agenten ausgestattet,
wobei Schritt A) die Schritte umfasst:
a) durch die Client-Applikation, Senden der Dienst-Anforderung an die Client-API;
b) durch die Client-API, Übertragen der Dienst-Anforderung an den REE-Agenten;
c) durch den REE-Agenten, Übertragen der Dienst-Anforderung an den TEE-Agenten;
d) durch den TEE-Agenten, Übertragen der Dienst-Anforderung an die Core-API;
e) durch die Core-API, Übertragen der Dienst-Anforderung an die Trusted-Applikation;
und Schritt B) die Schritte umfasst:
f) durch die Trusted-Applikation, Bereitstellen des angeforderten Sicherheits-Dienstes an die Core-API;
g) durch die Core-API, Bereitstellen des Sicherheits-Dienstes an den TEE-Agenten;
h) durch den TEE-Agenten, Bereitstellen des Sicherheits-Dienstes an den REE-Agenten;
i) durch den REE-Agenten, Bereitstellen des Sicherheits-Dienstes an die Client-API;
j) durch die Client-API, Bereitstellen des Sicherheits-Dienstes an die Client-Applikation.

Wahlweise umfasst die Laufzeitumgebung weiter einen REE-Sicherheits-Agenten in der normalen Laufzeitumgebung und einen TEE-Sicherheits-Agenten in der externen sicheren Laufzeitumgebung, wie weiter oben beschrieben, und umfasst das Verfahren weiter die Schritte: anlässlich des Übertragens der Dienst-Anforderung von der normalen Laufzeitumgebung an die externe sichere Laufzeitumgebung und des Übertragens des Sicherheits-Dienstes von der externen sicheren Laufzeitumgebung an die normale Laufzeitumgebung, kryptographisches Absichern des Kommunikationskanals zwischen der externen sicheren Laufzeitumgebung und der normalen Laufzeitumgebung, insbesondere mittels zusammenwirkendem Erzeugen, Übertragen und Verifizieren einer Prüffunktion, insbesondere Signatur oder Message Authentication Code MAC, durch den Device-Attestation-Agent und den Verifizierungs-Agenten, oder mittels Einrichten und Betreiben eines Secure Channel mittels der Secure-Channel-Agenten.

Wahlweise wird in Schritten des Sendens der Dienst-Anforderung zusammen mit der Dienst-Anforderung ein Applikations-Identifikator (z.B. UUID = Universally Unique Identifier) der Sicherheits-Applikation gesendet, der eine (eindeutige) Adressierung der Sicherheits-Applikation ermöglicht. UUID ist ein Standard für Identifikatoren, der in der Softwareentwicklung verwendet wird. Er ist von der Open Software Foundation OSF als Teil des Distributed Computing Environment DCE standardisiert. Die Absicht hinter UUIDs ist, Informationen in verteilten Systemen ohne zentrale Koordination eindeutig kennzeichnen zu können.

### Kurze Beschreibung der Zeichnungen

Im Folgenden wird die Erfindung an Hand von Ausführungsbeispielen und unter Bezugnahme auf die Zeichnung näher erläutert, in der zeigen:
- Fig. 1: ein Endgerät mit einer normalen und einer sicheren Laufzeitumgebung, gemäß dem Stand der Technik;
- Fig. 2: ein Endgerät mit einer normalen Laufzeitumgebung und einen Sicherheits-Server mit einer externen sicheren Laufzeitumgebung, gemäß einer Ausführungsform der Erfindung.

### Detaillierte Beschreibung von Ausführungsbeispielen

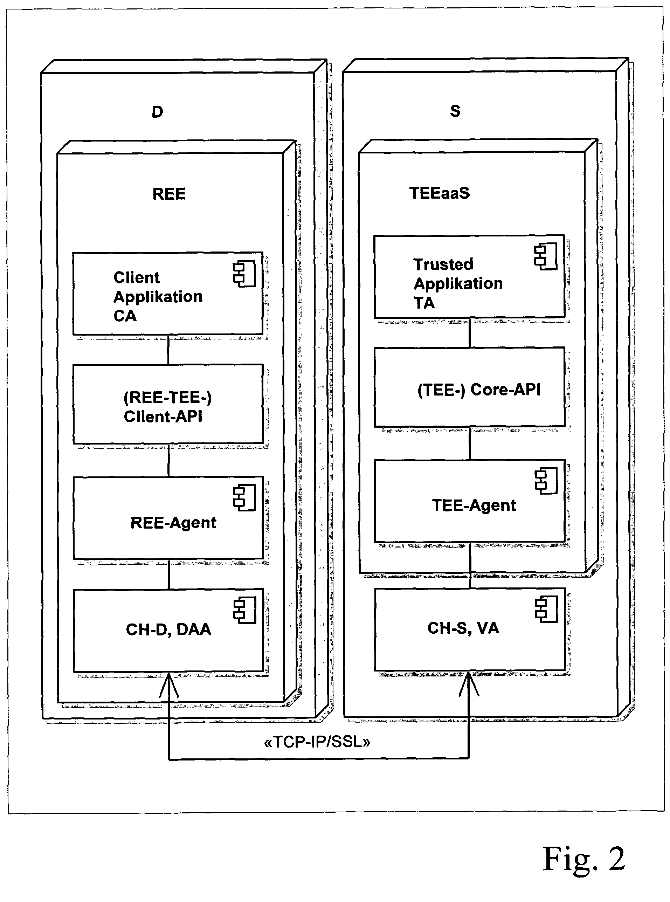

Fig. 2 zeigt ein Endgerät D (Mobile Device) mit einer normalen Laufzeitumgebung REE und einen vom Endgerät D getrennten Server S mit einer externen sicheren Laufzeitumgebung TEEaaS, gemäß einer Ausführungsform der Erfindung. Im Unterschied zur Anordnung aus Fig. 1 ist die sichere Laufzeitumgebung TEEaaS auf einem externen Server S vorgesehen, den die interne normale Laufzeitumgebung REE des Endgeräts D mittels eines Client /Server Kommunikationsprotokolls (z.B. via Remote Procedure Call) erreichen kann. Die Gesamtheit der internen Laufzeitumgebung REE und der externen Laufzeitumgebung TEEaaS bildet eine gesamte, verteilte Laufzeitumgebung, die das Endgerät D nutzen kann.

Die im Endgerät D implementierte normale Laufzeitumgebung REE aus Fig. 2 umfasst im Einzelnen eine Client-Applikation CA, eine Client-API, einen REE-Agenten und einen REE-Sicherheits-Agenten. Der REE-Sicherheits-Agent ist wahlweise als Secure-Channel-Agent CH-D des Device oder als Device-Attestation-Agent DAA gestaltet. Die auf dem Server S vorgesehene externe sichere Laufzeitumgebung TEEaaS umfasst im Einzelnen eine Trusted Applikation TA, eine Core-API, einen TEE-Agenten und einen TEE-Sicherheits-Agenten. Der TEE-Sicherheits-Agent ist wahlweise als Secure-Channel-Agent CH-S des Servers oder als Verifizierungs-Agent VA gestaltet.

Fig. 2 zeigt eine bevorzugte, abgesicherte Ausführungsform der Erfindung. Bei dieser ist in der normalen Laufzeitumgebung REE ein REE-Sicherheits-Agent CH-D (Secure-Channel-Agent des Device) oder DAA-D (Device-Attestation-Agent) implementiert. In der externen sicheren Laufzeitumgebung TEEaaS ist ein entsprechender TEE-Sicherheits-Agenten CH-S (Secure-Channel-Agent des Servers) oder VA (Verifizierungs-Agent) implementiert. Der REE-Sicherheits-Agent CHA-D bzw. DAA-D und der TEE-Sicherheits-Agent CH-S bzw. VA sind dazu eingerichtet, zusammenwirkend den mittels des REE-Agenten und der TEE-Agenten hergestellten und betriebenen Kommunikationskanal kryptographisch abzusichern.

Fig. 2 umfasst zwei Varianten der bevorzugten, abgesicherten Ausführungsform. Gemäß einer ersten Variante ist der REE-Sicherheits-Agent als Device-Attestation-Agent DAA-D gestaltet ist. Anlässlich eines Übertragens einer Dienst-Anforderung von der normalen Laufzeitumgebung REE an die externe sichere Laufzeitumgebung TEEaaS erzeugt der Device-Attestation-Agent DAA-D eine Signatur oder einen Message Authentication Code MAC und überträgt die Signatur bzw. den MAC mit der Dienst-Anforderung. Der TEE-Sicherheits-Agent ist als Verifizierungs-Agent VA-S gestaltet, der eine vom Device-Attestation-Agent DAA-D an den Verifizierungs-Agenten VA übertragene Signatur/MAC verifiziert und somit den Client, also das Endgerät D, authentifiziert. Gemäß einer zweiten Variante sind der REE-Sicherheits-Agent und der TEE-Sicherheits-Agent als Secure-Channel-Agenten CH-D, CH-S gestaltet. Diese erzeugen und betreiben zwischen der normalen Laufzeitumgebung REE und der externen sicheren Laufzeitumgebung TEEaaS eine kryptographisch gesicherten Secure Channel CH.

## Patentansprüche

1. Laufzeitumgebung für ein mobiles Endgerät (D), umfassend:
- eine im Endgerät implementierte normale Laufzeitumgebung (REE) für Client-Applikationen (CA);
- eine durch das Endgerät nutzbare sichere Laufzeitumgebung (TEE) für Trusted Applikationen (TA);
wobei die normale Laufzeitumgebung (REE) und die sichere Laufzeitumgebung (TEE) dazu eingerichtet sind, zusammenwirkend eine Kommunikationsverbindung zwischen der normalen und der sicheren Laufzeitumgebung (REE, TEE) herzustellen und zu betreiben, so dass Dienst-Anforderungen von der normalen (REE) an die sichere Laufzeitumgebung (TEE) übertragen werden können und Sicherheits-Dienste von der sicheren (TEE) an die normale Laufzeitumgebung (REE) bereitgestellt werden können; wobei
- die sichere Laufzeitumgebung (TEE) als externe sichere Laufzeitumgebung (TEEaaS) auf einem außerhalb des Endgeräts angeordneten Server (S) implementiert ist, wobei die Sicherheits-Dienste auch bei ausgeschaltetem Endgerät (D) erreichbar sind;
- die normale Laufzeitumgebung (REE) und die externe sichere Laufzeitumgebung (TEEaaS) dazu eingerichtet sind, zum Herstellen der Kommunikationsverbindung ein Client/Server Protokoll zwischen der normalen Ausführungsumgebung (REE) und der externen sicheren Laufzeitumgebung (TEEaaS) auszuführen, und die Laufzeitumgebung weiter umfasst:
- eine in der normalen Laufzeitumgebung (REE) implementierte Client-API und eine in der sicheren Laufzeitumgebung (TEE) implementierte Core-API, die dazu eingerichtet sind, Dienst-Anforderungen für Sicherheits-Dienste von Client-Applikationen (CA) an Trusted-Applikationen (TA) zu leiten, sowie mit Dienst-Anforderungen angeforderte Sicherheits-Dienste von Trusted-Applikationen (CA) an Client-Applikationen (CA) zu leiten; und
- einen in der normalen Laufzeitumgebung (REE) implementierten REE-Agenten und einen in der sicheren Laufzeitumgebung (TEE) implementierten TEE-Agenten, die dazu eingerichtet sind, zusammenwirkend eine Kommunikationsverbindung zwischen der normalen und der sicheren Laufzeitumgebung (REE, TEE) herzustellen und zu betreiben, so dass Dienst-Anforderungen von der normalen (REE) an die sichere Laufzeitumgebung (TEE) übertragen werden können und Sicherheits-Dienste von der sicheren (TEE) an die normale Laufzeitumgebung (REE) übertragen werden können; wobei der REE-Agent und der TEE-Agent dazu eingerichtet sind, zum Herstellen der Kommunikationsverbindung das Client/Server Protokoll zwischen der normalen Ausführungsumgebung (REE) und der externen sicheren Laufzeitumgebung (TEEaaS) auszuführen.

2. Laufzeitumgebung nach Anspruch 1, weiter umfassend:
- einen in der normalen Laufzeitumgebung (REE) implementierten REE-Sicherheits-Agenten (CH-D, DAA-D);
- einen in der externen sicheren Laufzeitumgebung (TEE) implementierten TEE-Sicherheits-Agenten;
wobei der REE-Sicherheits-Agent (CHA-D, DAA-D) und der TEE-Sicherheits-Agent (CH-S, VA) dazu eingerichtet sind, zusammenwirkend den mittels des REE-Agenten und der TEE-Agenten hergestellten und betriebenen Kommunikationskanal kryptographisch abzusichern.

3. Laufzeitumgebung nach Anspruch 2, wobei dem REE-Sicherheits-Agenten Zugriff auf eine im Endgerät angeordnete Sicherheitskomponente (SE; TPM; Software SE) ermöglicht ist, in welcher zumindest ein kryptographischer Schlüssel für die kryptographische Absicherung des Kommunikationskanals abgespeichert ist.

4. Laufzeitumgebung nach Anspruch 2 oder 3, wobei
- der REE-Sicherheits-Agent als Device-Attestation-Agent (DAA-D) gestaltet ist, der dazu eingerichtet ist, eine kryptographische Prüffunktion, insbesondere Signatur oder Message Authentication Code, zu erzeugen und die Prüffunktion anlässlich eines Übertragens einer Dienst-Anforderung von der normalen Laufzeitumgebung (REE) an die externe sichere Laufzeitumgebung (TEEaaS) zu übertragen;
- der TEE-Sicherheits-Agent als Verifizierungs-Agent (VA-S) gestaltet ist, der dazu eingerichtet ist, eine vom Device-Attestation-Agent (DAA-D) an den Verifizierungs-Agenten (VA-S) übertragene Prüffunktion (Signatur, MAC) zu verifizieren.

5. Laufzeitumgebung nach Anspruch 2 oder 3, wobei der REE-Sicherheits-Agent und der TEE-Sicherheits-Agent als Secure-Channel-Agenten (CH-D, CH-S) gestaltet sind, die dazu eingerichtet sind, zwischen der normalen Laufzeitumgebung (REE) und der externen sicheren Laufzeitumgebung (TEEaaS) einen kryptographisch gesicherten Secure Channel (CH) zu betreiben.

6. Laufzeitumgebung nach einem der Ansprüche 1 bis 5, wobei im Endgerät zumindest eine Client-Applikation (CA) implementiert ist und auf dem Server zumindest eine Trusted-Applikation (TA) implementiert ist.

7. Endgerät, mit einer normalen Laufzeitumgebung (REE), und dem REE-Agenten nach einem der Ansprüche 1 bis 6, der dazu eingerichtet ist, zum Herstellen der Kommunikationsverbindung zum Server ein Client/Server Protokoll auszuführen.

8. Server, mit einer externen sicheren Laufzeitumgebung (TEEaaS), und dem TEE-Agenten nach einem der Ansprüche 1 bis 6, der dazu eingerichtet ist, ein Client/Server Protokoll auszuführen.

9. Verfahren zum Bereitstellen eines Sicherheits-Dienstes einer Trusted-Applikation (TA) an eine Client-Applikation (CA), in einer Laufzeitumgebung nach einem der Ansprüche 1 bis 6, umfassend die Schritte:
A) Übertragen einer Dienst-Anforderung für einen Sicherheits-Dienst einer in der externen sicheren Laufzeitumgebung (TEEaaS) implementierten Trusted-Applikation (TA) von einer in der normalen Laufzeitumgebung (REE) implementierten Client-Applikation (CA) an die Trusted-Applikation (TA);
B) Bereitstellen des Sicherheits-Dienstes von der Trusted-Applikation (TA) an die Client-Applikation (CA); wobei anlässlich von Schritt A) ein Client/Server Protokoll zwischen der normalen Ausführungsumgebung (REE) und der externen sicheren Laufzeitumgebung (TEEaaS) eröffnet und/oder ausgeführt wird, die Dienst-Anforderung im Rahmen des Client/Server Protokolls von der Client-Applikation (CA) an die Trusted-Applikation (TA) übertragen wird, und der Sicherheits-Dienst im Rahmen des Client/Server Protokolls von der Trusted-Applikation (TA) an die Client-Applikation (CA) bereitgestellt wird.

10. Verfahren nach Anspruch 9, wobei die Laufzeitumgebung weiter nach Anspruch 1 gestaltet ist;
wobei Schritt A) die Schritte umfasst:
a) durch die Client-Applikation (CA), Senden der Dienst-Anforderung an die Client-API;
b) durch die Client-API, Übertragen der Dienst-Anforderung an den REE-Agenten;
c) durch den REE-Agenten, Übertragen der Dienst-Anforderung an den TEE-Agenten;
d) durch den TEE-Agenten, Übertragen der Dienst-Anforderung an die Core-API;
e) durch die Core-API, Übertragen der Dienst-Anforderung an die Trusted-Applikation (TA);
und Schritt B) die Schritte umfasst:
f) durch die Trusted-Applikation (TA), Bereitstellen des angeforderten Sicherheits-Dienstes an die Core-API;
g) durch die Core-API, Bereitstellen des Sicherheits-Dienstes an den TEE-Agenten;
h) durch den TEE-Agenten, Bereitstellen des Sicherheits-Dienstes an den REE-Agenten;
i) durch den REE-Agenten, Bereitstellen des Sicherheits-Dienstes an die Client-API;
j) durch die Client-API, Bereitstellen des Sicherheits-Dienstes an die Client-Applikation (CA).

11. Verfahren nach Anspruch 9 oder 10, wobei die Laufzeitumgebung weiter nach einem der Ansprüche 2 bis 5 gestaltet ist, weiter umfassend die Schritte: anlässlich des Übertragens der Dienst-Anforderung von der normalen Laufzeitumgebung (REE) an die externe sichere Laufzeitumgebung (TEEaaS) und des Übertragens des Sicherheits-Dienstes von der externen sicheren Laufzeitumgebung (TEEaaS) an die normale Laufzeitumgebung (REE), kryptographisches Absichern des Kommunikationskanals zwischen der externen sicheren Laufzeitumgebung (TEEaaS) und der normalen Laufzeitumgebung (REE), insbesondere mittels zusammenwirkendem Erzeugen, Übertragen und Verifizieren einer Prüffunktion, insbesondere Signatur oder Message Authentication Code MAC, durch den Device-Attestation-Agent (DAA) und den Verifizierungs-Agenten (VA) nach Anspruch 4, oder mittels Einrichten und Betreiben eines Secure Channel mittels der Secure-Channel-Agenten (CH-D, CH-S) nach Anspruch 5.

12. Verfahren nach einem der Ansprüche 9 bis 11, wobei in Schritten des Sendens der Dienst-Anforderung zusammen mit der Dienst-Anforderung ein Applikations-Identifikator (UUID) der Sicherheits-Applikation (TA) gesendet wird, der eine Adressierung der Sicherheits-Applikation (TA) ermöglicht.

## Claims

1. A runtime environment for a mobile end device (D), comprising:
- a normal runtime environment implemented in the end device (REE) for client applications (CA);
- a secure runtime environment utilizable for trusted applications (TA) by the end device (TEE);
wherein the normal runtime environment (REE) and the secure runtime environment (TEE) are devised to cooperatively establish and operate a communication connection between the normal and the secure runtime environment (REE, TEE), so that service requests can be transferred from the normal (REE) to the secure runtime environment (TEE) and security services can be supplied from the secure (TEE) to the normal runtime environment (REE);
wherein
- the secure runtime environment (TEE) is implemented as an external secure runtime environment (TEEaaS) on a server arranged outside the end device (S), wherein the security services are also reachable when the end device (D) is switched off;
- the normal runtime environment (REE) and the external secure runtime environment (TEEaaS) are devised to execute a client/ server protocol between the normal runtime environment (REE) and the external secure runtime environment (TEEaaS) for establishing the communication connection, and the runtime environment further comprises:
- a client API implemented in the normal runtime environment (REE) and a core API implemented in the secure runtime environment (TEE) which are devised to pass service requests for security services from client applications (CA) to trusted applications (TA) as well as to pass security services requested by service requests (CA) from trusted applications (CA) to client applications; and an REE agent implemented in the normal runtime environment (REE) and a TEE agent implemented in the secure runtime environment (TEE) are devised to cooperatively establish and operate a communication connection between the normal and the secure runtime environment (REE, TEE), so that service requests can be transferred from the normal (REE) to the secure runtime environment (TEE) and security services can be transferred from the secure (TEE) to the normal runtime environment (REE); wherein the REE agent and the TEE agent are devised to execute the client/server protocol between the normal runtime environment (REE) and the external secure runtime environment (TEEaaS) for establishing the communication connection.

2. The runtime environment according to claim 1, further comprising:
- an REE security agent (CH-D, DAA-D) implemented in the normal runtime environment (REE);
- a TEE security agent implemented in the external secure runtime environment (TEE);
wherein the REE security agent (CHA-D, DAA-D) and the TEE security agent (CH-S, VA) are devised to cryptographically secure in a cooperative manner the communication channel established and operated by means of the REE agent and the TEE agents.

3. The runtime environment according to claim 2, wherein for the REE security agent access to a security component arranged in the end device (SE; TPM; Software SE) is made possible, in which at least a cryptographic key is stored for the cryptographic securing of the communication channel.

4. The runtime environment according to claim 2 or 3, wherein
- the REE security agent is designed as a device attestation agent (DAA-D) which is devised to generate a cryptographic check function, in particular a signature or message authentication code, and to transfer the check function on the occasion of a transferring of a service request from the normal runtime environment (REE) to the external secure runtime environment (TEEaaS);
- the TEE security agent is designed as a verification agent (VA-S) which is devised to verify a check function (signature, MAC) transferred from the device attestation agent (DAA-D) to the verification agent (VA-S).

5. The runtime environment according to claim 2 or 3, wherein the REE security agent and the TEE security agent are designed as secure channel agents (CH-D, CH-S) which are devised to operate a cryptographically secured secure channel (CH) between the normal runtime environment (REE) and the external secure runtime environment (TEEaaS).

6. The runtime environment according to any of claims 1 to 5, wherein in the end device at least a client application (CA) is implemented and on the server at least a trusted application (TA) is implemented.

7. An end device, having a normal runtime environment (REE), and the REE agent according to any of claims 1 to 6, which is devised to execute a client/server protocol for establishing the communication connection to the server.

8. A server, having an external secure runtime environment (TEEaaS), and the TEE agent according to any of claims 1 to 6, which is devised to execute a client/server protocol.

9. A method for supplying a security service of a trusted application (TA) to a client application (CA), in a runtime environment according to any of claims 1 to 6, comprising the steps:
A) transferring a service request for a security service of a trusted application (TA) implemented in the external secure runtime environment (TEEaaS) from a client application (CA) implemented in the normal runtime environment (REE) to the trusted application (TA);
B) supplying the security service by the trusted application (TA) to the client application (CA);
wherein
on the occasion of Step A) a client/ server protocol is opened and/ or executed between the normal runtime environment (REE) and the external secure runtime environment (TEEaaS), the service request is transferred within the scope of the client/ server protocol from the client application (CA) to the trusted application (TA), and the security service within the scope of the client/ server protocol is supplied from the trusted application (TA) to the client application (CA).

10. The method according to claim 9, wherein the runtime environment is further designed according to claim 1;
wherein step A) comprises the steps:
a) by the client application (CA), sending the service request to the client API;
b) by the client API, transferring the service request to the REE agent;
c) by the REE agent, transferring the service request to the TEE agent;
d) by the TEE agent, transferring the service request to the core API;
e) by the core API, transferring the service request to the trusted application (TA);
and Step B) comprises the steps:
f) by the trusted application (TA), supplying the requested security service to the core API;
g) by the core API, supplying the security service to the TEE agent;
h) by the TEE agent, supplying the security service to the REE agent;
i) by the REE agent, supplying the security service to the client API;
j) by the client API, supplying the security service to the client application (CA).

11. The method according to claim 9 or 10, wherein the runtime environment is further designed according to any of claim 2 to 5, further comprising the steps: on the occasion of the transferring of the service request from the normal runtime environment (REE) to the external secure runtime environment (TEEaaS) and the transferring of the security service from the external secure runtime environment (TEEaaS) to the normal runtime environment (REE), cryptographic securing the communication channel between the external secure runtime environment (TEEaaS) and the normal runtime environment (REE), in particular by means of cooperatively generating, transferring and verifying a check function, in particular signature or message authentication code MAC, by the device attestation agent (DAA) and the verification agent (VA) according to claim 4, or by means of establishing and operating a secure channel by means of the secure channel agents (CH-D, CH-S) according to claim 5.

12. The method according to any of claims 9 to 11, wherein in steps of sending the service request an application identifier (UUID) of the security application (TA) is sent together with the service request, which makes an addressing of the security application (TA) possible.

## Revendications

1. Environnement d'exécution destiné à un terminal mobile (D), comprenant :
- un environnement normal d'exécution (REE), mis en oeuvre dans le terminal mobile, pour applications client (CA) ;
- un environnement sécurisé d'exécution (TEE), utilisable par le terminal, pour applications Trusted (TA) ;
cependant que l'environnement normal d'exécution (REE) et l'environnement sécurisé d'exécution (TEE) sont conçus pour, en concomitance, établir et exploiter une liaison de communication entre l'environnement normal et l'environnement sécurisé d'exécution (REE, TEE), de telle façon que des demandes de service peuvent être transmises de l'environnement normal (REE) à l'environnement sécurisé d'exécution (TEE) et que des services de sécurité peuvent être mis à disposition de l'environnement sécurisé (TEE) à l'environnement normal d'exécution (REE) ;
cependant que
- l'environnement sécurisé d'exécution (TEE) est mis en oeuvre en tant qu'environnement sécurisé externe d'exécution (TEEaaS) sur un serveur (S) disposé à l'extérieur du terminal, cependant que les services de sécurité sont aussi accessibles quand le terminal (D) est éteint ;
- l'environnement normal d'exécution (REE) et l'environnement sécurisé externe d'exécution (TEEaaS) sont conçus pour, aux fins de l'établissement de la liaison de communication, effectuer un protocole client/serveur entre l'environnement normal d'exécution (REE) et l'environnement sécurisé externe d'exécution (TEEaaS), et que l'environnement d'exécution comprend en outre :
- une API client mise en oeuvre dans l'environnement normal d'exécution (REE) et une API Core, mise en oeuvre dans l'environnement sécurisé d'exécution (TEE), conçues pour mener d'applications client (CA) à des applications Trusted (TA) des demandes de service pour services de sécurité, ainsi que pour mener d'applications Trusted (CA) à des applications client (CA) des services de sécurité demandés avec des demandes de service ; et
- un agent REE mis en oeuvre dans l'environnement normal d'exécution (REE), et un agent TEE mis en oeuvre dans l'environnement sécurisé d'exécution (TEE), lesquels sont conçus pour, en concomitance, établir et exploiter une liaison de communication entre l'environnement normal et l'environnement sécurisé d'exécution (REE, TEE), de telle façon que des demandes de service peuvent être transmises de l'environnement normal (REE) à l'environnement sécurisé d'exécution (TEE) et que des services de sécurité peuvent être transmis de l'environnement sécurisé (TEE) à l'environnement normal d'exécution (REE) ;
cependant que l'agent REE et l'agent TEE sont conçus pour, aux fins de l'établissement de la liaison de communication, effectuer le protocole client/serveur entre l'environnement normal d'exécution (REE) et l'environnement sécurisé externe d'exécution (TEEaaS).

2. Environnement d'exécution selon la revendication 1, comprenant en outre :
- un agent de sécurité REE (CH-D, DAA-D) mis en oeuvre dans l'environnement normal d'exécution (REE) ;
- un agent de sécurité TEE mis en oeuvre dans l'environnement sécurisé externe d'exécution (TEE) ; cependant que l'agent de sécurité REE (CHA-D, DAA-D) et l'agent TEE (CH-S, VA) sont conçus pour, en concomitance, sécuriser cryptographiquement le canal de communication établi et exploité au moyen de l'agent REE et de l'agent TEE.

3. Environnement d'exécution selon la revendication 2, cependant que, à l'agent de sécurité REE, un accès à un composant de sécurité (SE; TPM; logitiel SE) agencé dans le terminal et dans lequel au moins une clé cryptographique pour la sécurisation cryptographique du canal de communication est mémorisée est permis.

4. Environnement d'exécution selon la revendication 2 ou 3, cependant que
- l'agent de sécurité REE est réalisé sous forme d'agent Device-Attestation (DAA-D) conçu pour générer une fonction cryptographique de vérification, en particulier une signature ou un code d'authentification de message, et pour, à l'occasion d'une transmission d'une demande de service, transmettre la fonction de vérification de l'environnement normal d'exécution (REE) à l'environnement sécurisé externe d'exécution (TEEaaS) ;
- l'agent de sécurité TEE est réalisé sous forme d'agent de vérification (VA-S) conçu pour vérifier une fonction de vérification (signature, MAC) transmise de l'agent Device-Attestation (DAA-D) à l'agent de vérification (VA-S).

5. Environnement d'exécution selon la revendication 2 ou 3, cependant que l'agent de sécurité REE et l'agent de sécurité TEE sont réalisés sous forme d'agents Secure-Channel (CH-D, CH-S) conçus pour exploiter entre l'environnement normal d'exécution (REE) et l'environnement sécurisé externe d'exécution (TEEaaS) un Secure Channel (CH) sécurisé cryptographiquement.

6. Environnement d'exécution selon une des revendications de 1 à 5, cependant que, dans le terminal, au moins une application client (CA) est mise en oeuvre, et que, sur le serveur, au moins une application Trusted (TA) est mise en oeuvre.

7. Terminal ayant un environnement normal d'exécution (REE) et l'agent REE selon une des revendications de 1 à 6, lequel est conçu pour, aux fins de l'établissement de la liaison de communication avec le serveur, effectuer un protocole client/serveur.

8. Serveur ayant un environnement sécurisé externe d'exécution (TEEaaS) et l'agent TEE selon une des revendications de 1 à 6, lequel est conçu pour effectuer un protocole client/serveur.

9. Procédé de mise à disposition d'un service de sécurité d'une application Trusted (TA) à une application client (CA), dans un environnement d'exécution selon une des revendications de 1 à 6, comprenant les étapes :
A) transmission d'une demande de service pour un service de sécurité d'une application Trusted (TA) mise en oeuvre dans l'environnement sécurisé externe d'exécution (TEEaaS) depuis une application client (CA) mise en oeuvre dans l'environnement normal d'exécution (REE) à l'application Trusted (TA) ;
B) mise à disposition du service de sécurité de l'application Trusted (TA) à l'application client (CA) ;
cependant que
à l'occasion de l'étape A), un protocole client/serveur entre l'environnement normal d'exécution (REE) et l'environnement sécurisé externe d'exécution (TEEaaS) est démarré et/ou effectué, la demande de service est, dans le cadre du protocole client/serveur, transmise de l'application client (CA) à l'application Trusted (TA), et le service de sécurité est mis à disposition dans le cadre du protocole client/serveur de l'application Trusted (TA) à l'application client (CA).

10. Procédé selon la revendication 9, cependant que l'environnement d'exécution est en outre réalisé selon la revendication 1 ;
cependant que l'étape A) comprend les étapes :
a) par l'application client (CA), envoi de la demande de service à l'API client ;
b) par l'API client, transmission de la demande de service à l'agent REE ;
c) par l'agent REE, transmission de la demande à l'agent TEE ;
d) par l'agent TEE, transmission de la demande de service à l'API Core ;
e) par l'API Core, transmission de la demande à l'application Trusted (TA) ;
et que l'étape B) comprend les étapes :
f) par l'application Trusted (TA), mise à disposition du service de sécurité demandé à l'API Core ;
g) par l'API Core, mise à disposition du service de sécurité à l'agent TEE ;
h) par l'agent TEE, mise à disposition du service de sécurité à l'agent REE ;
i) par l'agent REE, mise à disposition du service de sécurité à l'API client ;
j) par l'API client, mise à disposition du service de sécurité à l'application client (CA).

11. Procédé selon la revendication 9 ou 10, cependant que l'environnement d'exécution est en outre réalisé selon une des revendications de 2 à 5, en outre comprenant les étapes : à l'occasion de la transmission de la demande de service de l'environnement normal d'exécution (REE) à l'environnement sécurisé externe d'exécution (TEEaaS) et de la transmission du service de sécurité de l'environnement sécurisé externe d'exécution (TEEaaS) à l'environnement normal d'exécution (REE), sécurisation cryptographique du canal de communication entre l'environnement sécurisé externe d'exécution (TEEaaS) et l'environnement normal d'exécution (REE), en particulier au moyen de la génération, transmission et vérification concomitantes d'une
fonction de vérification, en particulier d'une signature ou d'un code d'authentification de message MAC, par l'agent Device-Attestation (DAA) et l'agent de vérification (VA) selon la revendication 4, ou au moyen de la création et de l'exploitation d'un Secure-Channel au moyen des agents Secure-Channel (CH-D, CH-S) selon la revendication 5.

12. Procédé selon une des revendications de 9 à 11, cependant que, lors d'étapes de l'envoi de la demande de service, en même temps que la demande de service, un identificateur d'application (UUID) de l'application de sécurité (TA) est envoyé, lequel permet un adressage de l'application de sécurité (TA).
